# FASCICULE DE BREVET EUROPEEN

(11) **EP 0 628 846 B1**
(45) Date de publication et mention de la délivrance du brevet: **12.11.1997**
(21) Numéro de dépôt: 94108496.4
(22) Date de dépôt: 02.06.1994
(51) Int. Cl.: G02C 5/22

(54) **Charnière à ressort pour monture de lunettes**
Federscharnier für Brillengestell
Eyeglass spring hinge

(30) Priorité: 09.06.1993 CH 1732/93
(43) Date de publication de la demande: 14.12.1994
(73) Titulaire: LN INDUSTRIES S.A., 1211 Genève 8 (CH)
(72) Inventeur: Gerbet, André, F-39300 Champagnole (FR)
(74) Mandataire: ARDIN & CIE S.A.

(56) Documents cités:
- EP-A- 0 340 161
- EP-A- 0 378 969
- DE-U- 9 012 710
- FR-A- 1 271 442
- FR-A- 1 536 292
- FR-A- 2 366 592
- FR-A- 2 644 902

## Description

La présente invention concerne une charnière à ressort pour monture de lunettes, comprenant deux charnons dont l'un est destiné à être fixé à la partie face de la monture, l'autre charnon étant destiné à être relié à une branche, et un dispositif à ressort pour relier ledit autre charnon à la branche, ce dispositif comprenant un logement s'étendant suivant un sens longitudinal par rapport à la branche, un prolongement solidaire dudit autre charnon et destiné à être monté de façon coulissante dans le logement et un ressort à boudin disposé suivant ce prolongement, ce ressort s'appuyant d'une part, par une première extrémité, sur une partie dudit prolongement et d'autre part par sa deuxième extrémité sur les parois du logement de façon à solliciter le prolongement en direction du fond du logement.

Une charnière de ce type est décrite dans le document EP 0.340.161 et comprend une pièce de verrouillage introduite dans le logement pour y être retenue et pour servir d'appui à la deuxième extrémité du ressort.

D'autres charnières analogues sont connues de FR-A-2 366 592 et de DE-U- 90 12 170.

La présente invention a pour but de simplifier la construction de la charnière connue et elle est caractérisée à cet effet, en ce que ladite deuxième extrémité du ressort à boudin présente une portion consistant en au moins une spire déformée, écrasée ou possédant un diamètre supérieur à celui des autres spires du ressort, dépassant au moins partiellement la surface extérieure du ressort à boudin, cette portion étant destinée à coopérer avec un décrochement prévu sur la paroi interne du logement de façon que le décrochement serve de butée d'appui pour ladite portion du ressort.

Par cette disposition, le nombre de composants de la charnière est encore diminué tout en permettant un montage plus rapide et facile et un fonctionnement très fiable.

Selon un mode d'exécution avantageux, ladite portion du ressort est constituée par au moins une spire présentant un diamètre supérieur à celui des autres spires du ressort à boudin, la paroi interne du logement présentant une rainure circulaire dans laquelle ladite portion du ressort est engagée.

Cette disposition assure un montage particulièrement aisé et un prix de revient faible.

Selon un autre mode d'exécution avantageux, ladite portion du ressort est constituée par au moins une spire du ressort décalée latéralement par rapport aux autres spires du ressort à boudin et destinée à s'engager dans une creusure prévue dans la paroi interne du logement.

Des ressorts de ce type peuvent être obtenus aisément ce qui permet une fabrication rapide et à peu de frais.

Avantageusement, la paroi du logement comporte un perçage agencé de façon à permettre de dégager au moyen d'un outil ladite portion du ressort de la creusure pour sortir le prolongement du logement.

Cette disposition permet d'obtenir une charnière d'un démontage rapide et aisé pour changer par exemple de branche de lunettes, tout en assurant un fonctionnement fiable.

D'autres avantages ressortent des caractéristiques exprimées dans les revendications dépendantes et de la description exposant ci-après l'invention plus en détail à l'aide de dessins qui représentent schématiquement et à titre d'exemple deux modes d'exécution.

Les figures 1 et 3 sont des vues latérales en coupe de deux modes d'exécution.

Les figures 2 et 4 illustrent les ressorts utilisés dans les modes d'exécution représentés aux figures 1 et 3.

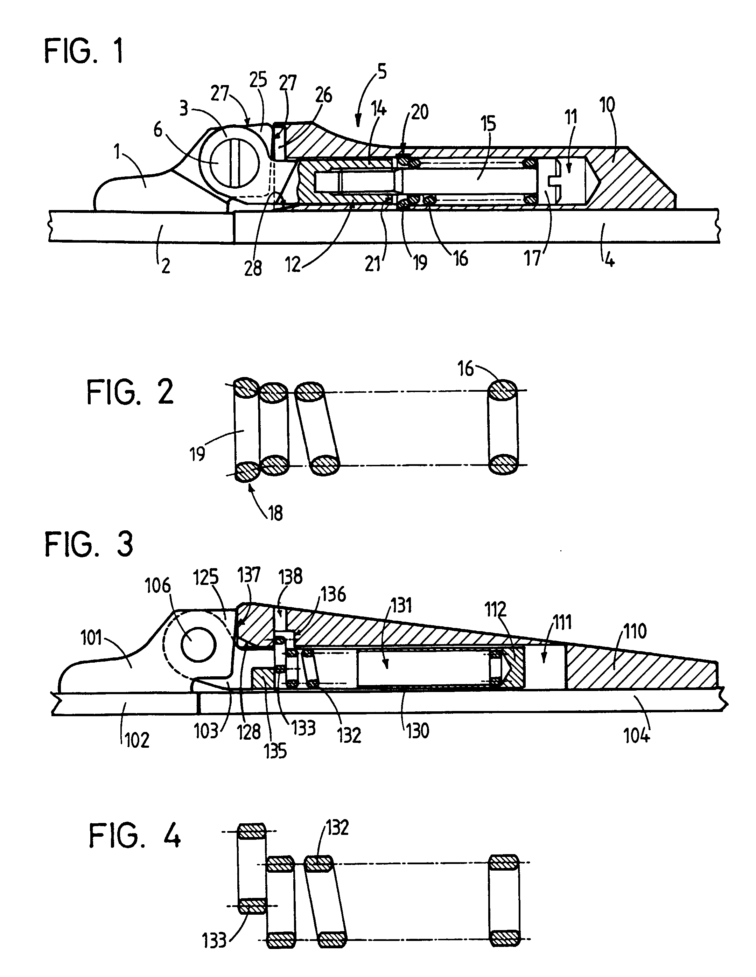

Le premier mode d'exécution représenté aux figures 1 et 2 comprend un charnon 1 solidaire de la partie face 2 de la monture de lunettes articulé grâce à une vis 6 à un charnon 3 relié à une branche de lunettes 4 par l'intermédiaire d'un dispositif élastique 5 à ressorts.

Ce dispositif comporte un boîtier 10 solidaire de la branche 4 présentant un logement 11 s'étendant suivant un sens longitudinal par rapport à la branche 4 et qui est ouvert à l'une de ses extrémités. Le charnon 3 est solidaire d un prolongement 12 monté de façon coulissante dans le logement 11. Ce prolongement est constitué d'une partie 14 venue d'une pièce avec le charnon 3 et d'une vis 15 montée sur la partie 14 et portant un ressort à boudin 16 s'appuyant, d une part, par une première extrémité sur la tête 17 de la vis 15 et, d'autre part, par sa deuxième extrémité sur la paroi interne du logement 11.

La deuxième extrémité de ce ressort à boudin 16 présente à cet effet une portion 18 dépassant la surface extérieure du ressort, constituée par une spire 19 du ressort possédant un diamètre supérieur à celui des autres spires du ressort. La paroi interne du logement 11 comprend un décrochement 20 sous forme d'une rainure circulaire dans laquelle la spire 19 est engagée. Ce décrochement 20 forme donc une butée d'appui pour la deuxième extrémité du ressort 16. Ce dernier sollicite le prolongement 12 en direction du fond du logement 11.

Le charnon 1 comporte un came 25 coopérant avec une surface d'appui 26 du boîtier 10. Cette surface d'appui 26 est de préférence constituée par un plaquette métallique. La came 25 possède deux faces plates 27 déterminant des positions ouvertes et repliées de la branche de lunettes 4.

Il est à noter que le ressort 16 est disposé avec une certaine précontrainte entre la tête 17 et le décrochement 20. Ainsi, la plaquette 26 est constamment en appui contre la came 25. Avant le montage du prolongement 12 dans le logement 11, le ressort 16 est monté sur la vis 15 entre la partie 14 et la tête 17. Lors du montage, le prolongement 12 est introduit par coulissement dans le logement 11. Pour faciliter l'introduction du ressort 16, le logement 11 comporte à son ouverture un chanfrein 28. Ensuite, la spire 19 à plus grand diamètre est poussée par la face frontale 21 de la partie 14 dans la rainure circulaire 20, où elle s'engage élastiquement pour verrouiller la deuxième extrémité du ressort 16 dans la paroi du logement 11.

Par cette disposition, on obtient une construction très simple avec un nombre de composants réduit, car aucune pièce de verrouillage du logement n'est nécessaire. En outre, le montage est très rapide et aisé, tout en permettant un fonctionnement très sûr.

Les figures 3 et 4 illustrent un deuxième mode d'exécution, avec un charnon 101 solidaire de la partie face 102 articulé grâce à la vis 106 au charnon 103. Un boîtier 110 est solidaire de la branche 104 présentant le logement 111. Le charnon 103 est solidaire du prolongement 112. Ce deuxième mode d'exécution diffère du premier par les caractéristiques suivantes. Le prolongement 112 du charnon 103 comprend une pièce 130 solidaire du charnon 103 dans laquelle est prévu un évidement 131. Le ressort 132 est logé dans cet évidement et s'appuie par sa première extrémité au fond de l'évidement 131. Il présente à son autre extrémité une spire 133 latéralement décalée par rapport aux autres spires. Cette spire 133 est engagée dans une creusure 136 prévue dans le boîtier 110 et est donc ainsi rendue solidaire de la paroi du logement 111. Pour l'introduction du prolongement 112 et du ressort 132 dans le logement 111, ce dernier présente à son extrémité ouverte un chanfrein 128 et le prolongement 112 comporte une entretoise 135 destinée à coopérer avec le ressort 132. Après le montage, le ressort 132 sollicite le prolongement 112 vers le fond du logement 111 de façon que la came 125 solidaire du charnon 101 coopère avec la face frontale 137 du boîtier 110.

Ce dernier comporte en outre un perçage 138 reliant l'extérieur du boîtier 110 avec la creusure 136. Par l'introduction d'un outil, il est ainsi possible de pousser la spire décalée 133 vers le bas à la figure 3 pour la dégager de la creusure 136 et pour extraire le prolongement 112 du logement 111. Cette disposition permet d'obtenir une branche de lunettes 104 élastique se démontant facilement, tout en assurant un fonctionnement fiable.

Il est bien entendu que les modes d'exécution décrits ci-dessus ne présentent aucun caractère limitatif et qu'ils peuvent recevoir toutes modifications désirables à l'intérieur du cadre tel que défini par la revendication 1. En particulier, le ressort à boudin pourra comprendre à sa deuxième extrémité une spire déformée ou écrasée de façon à présenter une portion dépassant la surface extérieure du ressort à boudin. Ce ressort pourra également présenter une partie terminale hélicoïdale à diamètre croissant. La spire présentant le diamètre le plus grand, favorablement la spire située à l'extrémité, étant destinée à s'engager dans la rainure prévue sur la paroi interne du logement.

## Revendications

1. Charnière à ressort pour monture de lunettes, comprenant deux charnons (1, 3) dont l'un (1) est destiné à être fixé à la partie face (2) de la monture, l'autre charnon (3) étant destinée à être relié à une branche (4), et un dispositif à ressort (5) pour relier ledit autre charnon (3) à la branche (4), ce dispositif comprenant un logement (11) s'étendant suivant un sens longitudinal par rapport à la branche (4), un prolongement (12) solidaire dudit autre charnon (3) et destiné à être monté de façon coulissante dans le logement (11) et un ressort à boudin (16) disposé suivant ce prolongement, ce ressort (16) s'appuyant d'une part, par une première extrémité, sur une partie dudit prolongement (12) et d'autre part par sa deuxième extrémité sur les parois du logement (11) de façon à solliciter le prolongement (12) en direction du fond du logement (11), caractérisé en ce que ladite deuxième extrémité du ressort à boudin (16) présente une portion (18) consistant en au moins une spire déformée, écrasée ou possédant un diamètre supérieur à celui des autres spires du ressort, dépassant au moins partiellement la surface extérieure du ressort à boudin (16), cette portion (18) étant destinée à coopérer avec un décrochement (20) prévu sur la paroi interne du logement (11) de façon que le décrochement (20) serve de butée d'appui pour ladite portion (18) du ressort (16).

2. Charnière selon la revendication 1, caractérisée en ce que ladite portion (18) du ressort est constituée par au moins une spire (19) présentant un diamètre supérieur à celui des autres spires du ressort à boudin (16), la paroi interne du logement (11) présentant une rainure circulaire (20) dans laquelle ladite portion (18) du ressort est engagée.

3. Charnière selon la revendication 1, caractérisée en ce que ladite portion du ressort est constituée par au moins une spire (133) du ressort (132) décalée latéralement par rapport aux autres spires du ressort à boudin (132) et destinée à s'engager dans une creusure (136) prévue dans la paroi interne du logement (111)

4. Charnière selon la revendication 3, caractérisée en ce que la paroi du logement (11) comporte un perçage (138) agencé de façon à permettre de dégager au moyen d'un outil ladite portion (133) du ressort (132) de la creusure (136) pour sortir le prolongement (112) du logement (111).

5. Charnière selon l'une des revendications 1 à 3, caractérisée en ce que le prolongement (12) est constitué par une tige (15) solidaire dudit autre charnon (3), le ressort à boudin (16) étant disposé sur cette tige (15) qui comporte une extrémité (17) d'une section droite plus grande que la tige (15) sur laquelle le ressort (16) prend appui par sa première extrémité, la seconde extrémité s'appuyant par ladite portion (18) sur le décrochement (20) de la paroi interne du logement (11).

6. Charnière selon l'une des revendications 1 à 3, caractérisée en ce que la prolongement (112) comprend un évidement (131) dans lequel le ressort à boudin (132) est logé au moins partiellement, sa première extrémité prenant appui sur le fond de l'évidement (131).

## Patentansprüche

1. Federscharnier für Brillengestell mit zwei Scharnierteilen (1, 3), deren eines (1) dazu bestimmt ist, am Vorderteil (2) des Gestells befestigt zu werden, während das zweite Scharnierteil (3) dazu besimmt ist, an einem Bügel (4) befestigt zu werden, und mit einer Federvorrichtung (5), um das benannte zweite Scharnierteil (3) mit dem Bügel (4) zu verbinden, wobei diese Vorrichtung ein Lager (11) umfasst, das sich längs am Bügel (4) entlang erstreckt, ferner ein mit dem benannten zweiten Scharnierteil (3) fest verbundenes Verlängerungsstück (12), das dazu bestimmt ist, gleitend in das benannte Lager (11) eingesetzt zu werden, sowie eine Schraubenfeder (16), die längs dieses Verlängerungsstückes angeordnet ist und einerseits mit ihrem ersten Ende auf einer Partie des benannten Verlängerungsstückes (12) und andererseits mit ihrem zweiten Ende auf den Wandungen des Lagers (11) ruht, und zwar so, dass sie das Verlängerungsstück (12) zum Boden des Lagers (11) hin drückt, dadurch gekennzeichnet, dass das benannte zweite Ende der Schraubenfeder (16) eine Partie (18) aufweist, die aus zumindest einer Windung besteht, die deformiert oder flachgedrückt ist oder einen grösseren Durchmesser als die anderen Federwindungen besitzt und die zumindest teilweise über die Peripherie der Schraubenfeder (16) hinausragt, wobei diese Partie (18) dazu bestimmt ist, so mit einem auf der Innenwandung der Lagers (11) vorgesehenen Absatz (20) zusammenzuwirken, dass der Absatz (20) als Stützlager für die benannte Partie (18) der Feder (16) wirken kann.

2. Scharnier gemäss Anspruch 1, dadurch gekennzeichnet, dass die benannte Partie (18) der Feder aus zumindest einer Windung (19) besteht, die einen grösseren Durchmesser als die anderen Windungen der Schraubenfeder (16) aufweist, wobei die Innenwandung des Lagers (11) eine kreisförmige Rille (20) aufweist, in die die benannte Partie (18) der Feder eingerastet ist.

3. Scharnier gemäss Anspruch 1, dadurch gekennzeichnet, dass die benannte Partie der Feder aus zumindest einer Windung (133) der Feder (132) besteht, die gegenüber den anderen Windungen der Schraubenfeder (132) seitlich versetzt und dazu bestimmt ist, in eine in der Innenwandung des Lagers (111) vorgesehene Aushöhlung (136) einzurasten.

4. Scharnier gemäss Anspruch 3, dadurch gekennzeichnet, dass die Wandung des Lagers (111) eine Bohrung (138) umfasst, die so eingerichtet ist, dass sie es gestattet, dass mit Hilfe eines Werkzeuges die benannte Partie (133) der Feder (132) aus der Aushöhlung (136) herausgelöst werden kann, damit sich das Verlängerungsstück (112) aus dem Lager (111) herausziehen lässt.

5. Scharnier gemäss einem der Ansprüche 1 bis 3, dadurch gekennzeichnet, dass das Verlängerungsstück (12) aus einem mit dem benannten zweiten Scharnierstück (30) fest verbundenen Stift (15) besteht, wobei die Schraubenfeder (16) auf diesem Stift (15) angeordnet ist, der ein Ende (17) aufweist, dessen Querschnitt grösser als der des Stiftes (15) selbst ist und auf dem sich die Feder (16) mit ihrem ersten Ende abstützt, während sich ihr anderes Ende durch die benannte Partie (18) auf dem Absatz (20) der Innenwandung des Lagers (11) abstützt.

6. Scharnier gemäss einem der Ansprüche 1 bis 3, dadurch gekennzeichnet, dass das Verlängerungsstück (112) eine Aussparung (131) umfasst, worin die Schraubenfeder (132) zumindest teilweise gelagert ist und mit ihrem ersten Ende auf dem Boden der Aussparung (131) ruht.

## Claims

1. A hinge with a spring for the frame of spectacles, including two knuckles (1, 3), of which one (1) is intended for fastening to the front part (2) of the frame and the other one (3) is intended for connection to a branch (4), and a spring device (5) for connecting said other knuckle (3) to the branch (4), this device including a housing (11) extending longitudinally with respect to the branch (4), an extension (12) integral with said other knuckle (3) and designed for being mounted slidably in the housing (11) and a coil spring (16) disposed along this extension, this spring (16) abutting, on the one hand, by a first end, against a part of said extension (12) and, on the other hand, by its second end, against the walls of the housing (11), so as to bias the extension (12) in the direction of the bottom of the housing (11), characterized in that said second end of the coil spring (16) exhibits a portion (18) consisting of at least one coil, which is deformed or compressed or has a diameter greater than that of the other coils of the spring, extending at least partly beyond the outer surface of the coil spring (16), this portion (18) being designed for cooperating with a step (20) provided on the inner wall of the housing (11) so that this step (20) acts as a support stop for said portion (18) of the spring (16).

2. A hinge according to claim 1, characterized in that said portion (18) of the spring is formed with at least one coil (19) having a diameter greater than that of other coils of the coil spring (16), the inner wall of the housing (11) exhibiting a circular groove (20) into which said portion (18) of the spring is engaged.

3. A hinge according to claim 1, characterized in that said portion of the spring is comprised of at least one coil (133) of the spring (132) shifted sideways with respect to the other coils of the coil spring (132) and designed for engagement in a hollow (136) provided in the inner wall of the housing (111).

4. A hinge according to claim 3, characterized in that the wall of the housing (11) has a hole (138) made in such a manner as to enable to disengage by means of a tool, said portion (133) of the spring (132) from the hollow (136) to extract the extension (112) from the housing (111).

5. A hinge according to one of claims 1 to 3, characterized in that the extension (12) is comprised of a rod (15) integral with said other knuckle (3), the coil spring (16) being arranged on this rod (15) which has an end (17) of a straight section greater than the rod (15) against which the spring (16) abuts by its first end, the second end abutting by said portion (18) against the step (20) of the inner wall of the housing (11).

6. A hinge according to one of claims 1 to 3, characterized in that the extension (112) incudes a hollow (131) in which is housed, at least partly, the coil spring (132), with its first end abutting against the bottom of the hollow (131).
